# EUROPÄISCHE PATENTSCHRIFT

(11) **EP 0 562 160 B1**
(45) Veröffentlichungstag und Bekanntmachung des Hinweises auf die Patenterteilung: **03.01.1996**
(21) Anmeldenummer: 92118708.4
(22) Anmeldetag: 02.11.1992
(51) Int. Cl.: F16J 15/32

(54) **Dichtungsanordnung**
Sealing arrangement
Dispositif d'étanchéité

(30) Priorität: 27.03.1992 DE 4209953
(43) Veröffentlichungstag der Anmeldung: 29.09.1993
(73) Patentinhaber: Firma Carl Freudenberg, D-69469 Weinheim (DE)
(72) Erfinder: Klein, Norbert, W-6944 Hemsbach (DE); Freiwald, Gerhard, W-6944 Hemsbach (DE)

(56) Entgegenhaltungen:
- EP-A- 0 258 094
- FR-A- 2 254 241
- FR-A- 2 567 981
- US-A- 2 823 966
- US-A- 4 433 846

## Beschreibung

Die Erfindung betrifft eine Dichtungsanordnung zur Abdichtung einer durch die Bohrung einer Wandung geführten Welle, umfassend einen Radialwellendichtring, der die abzudichtende Welle mit zumindest einer Dichtlippe aus elastomerem Werkstoff unter radialer Vorspannung umfangsseitig dichtend umschließt, wobei die Dichtlippe an einem radial nach innen weisenden ersten Schenkel eines im wesentlichen L-förmigen ersten Versteifungsrings festgelegt ist, wobei sich der zweite Schenkel in axialer Richtung erstreckt, zumindest im Bereich seiner axialen Begrenzung von elastomerem Werkstoff ummantelt ist, wobei in radialer Richtung zwischen der Welle und dem zweiten Schenkel ein Wälzlager angeordnet ist.

Eine solche Dichtungsanordnung ist aus der EP 0 258 094 A2 bekannt. Das Wälzlager ist mit seiner Innenlaufbahn auf der Welle und mit seiner Außenlaufbahn auf dem zweiten Schenkel angeordnet, wobei das Wälzlager als kombiniertes Radial- und Axiallager ausgebildet ist. Zur statischen Abdichtung des zweiten Schenkels im Gehäuse ist dieser auf der dem abzudichtenden Raum abgewandten Seite von gummielastischem Werkstoff überdeckt. Bei Verwendung der Dichtungsanordnung zur Abdichtung von rotierenden Wellen, die keinen optimalen Rundlauf haben, beispielsweise zum Abdichten von Antriebswellen in Kfz-Getrieben, die in Abhängigkeit vom Lastzustand der angeschlossenen Verbrennungskraftmaschine zu Schwingungen angeregt werden, sind die Gebrauchseigenschaften der vorbekannten Dichtungsanordnung wenig zufriedenstellend.

Aus der US-A-2,823,966 ist eine Dichtungsanordnung bekannt, bei der die Laufflächen des Wälzlagers auf separaten Ringen angeordnet sind. Der Innenring des Wälzlagers ist auf die Welle aufgepreßt und weist eine in Richtung der Welle offene, nutförmige Ausnehmung auf, in der ein O-Ring zur Abdichtung angeordnet ist. In axialer Richtung beiderseits des Wälzlagers ist jeweils eine Kassettendichtung angeordnet, wobei die dynamisch beanspruchten Dichtlippen der Kassettendichtung jeweils einen Axialvorsprung dichtend umschließen, der einstückig mit dem Innenring des Wälzlagers ausgebildet ist. Die Dichtringe der Kassettendichtungen sowie der Außenring des Wälzlagers sind von einer Hülse aus metallischem Werkstoff außenseitig umschlossen. Die vorbekannte Dichtungsanordnung weist einen komplizierten Aufbau auf und in fertigungstechnischer und wirtschaftlicher Hinsicht nur mit erheblichem Aufwand herstellbar.

In der FR-A-2 254 241 ist eine Dichtungsanordnung gezeigt, umfassend einen Radialwellendichtring mit einer Dichtlippe aus elastomerem Werkstoff, die eine abzudichtende Welle unter radialer Vorspannung dichtend umschließt. Die Dichtlippe ist an einem radial nach innen weisenden ersten Schenkel eines Versteifungsringes festgelegt, wobei ein Wälzlager zwischen einem sich in axialer Richtung erstreckenden zweiten Schenkel und einer Welle angeordnet ist. Das Wälzlager ist mit seiner Innenlauffläche auf der Welle und mit seinem Außenring im ummantelten Teilbereich des zweiten Schenkels abgestützt.

Eine weitere Dichtungsanordnung ist aus dem DE-GM 19 17 623 bekannt. Die Dichtungsanordnung ist durch einen Toleranzring gebildet, der einstückig mit einem Radialwellendichtring ausgebildet ist. Der Toleranzring besteht aus einem Hartstoffring, beispielsweise aus Stahl, der von gummielastischem Werkstoff allseitig überzogen ist. Der vorbekannte Toleranzring gelangt bevorzugt in Aufnahmegehäusen aus Leichtmetall zur Anwendung, um die unterschiedlichen Wärmedehnungen des Leichtmetallgehäuses und des Hartstoffringes aus Stahl zu kompensieren. Der Toleranzring liegt mit seinem gummielastischen Überzug unter radialer Vorspannung in einer Bohrung des Gehäuses an, wobei die Bohrung zur sicheren axialen Festlegung des Toleranzrings eine Profilierung aufweist, die mit dem Überzug in Eingriff ist. Eine derart ausgestaltete Bohrung ist in fertigungstechnischer und wirtschaftlicher Hinsicht wenig befriedigend.

Der Erfindung liegt die Aufgabe zugrunde, eine Dichtungsanordnung der vorbekannten Art derart weiterzuentwickeln, daß sich wesentlich verbesserte Gebrauchseigenschaften während einer langen Gebrauchsdauer ergeben, auch wenn die abzudichtende Welle während ihrer bestimmungsgemäßen Verwendung zu Schwingungen angeregt wird, daß die Schwingungen der rotierenden Welle isoliert/gedämpft werden und daß sich eine Verbesserung der Festlegung der Dichtungsanordnung ergibt, so daß axiale Verlagerungen der gesamten Dichtungsanordnung relativ zu der Wandung des Gehäuses zuverlässig vermieden werden können.

Diese Aufgabe wird erfindungsgemäß durch die kennzeichnenden Merkmale von Anspruch 1 gelöst. Auf vorteilhafte Ausgestaltungen nehmen die Unteransprüche Bezug.

Zur Verbesserung der Gebrauchseigenschaften der Dichtungsanordnung während einer langen Gebrauchsdauer für eine wirkungsvolle Schwingungsisolierung/Schwingungsdämpfung der abzudichtenden Welle und für eine verbesserte Festlegung der Dichtungsanordnung innerhalb der Wandung, so daß eine axiale Verlagerung der gesamten Dichtungsanordnung relativ zu der Wandung des Gehäuses während des Betriebs zuverlässig vermieden werden kann, ist es vorgesehen, daß in radialer Richtung zwischen der Welle und dem zweiten Schenkel ein Wälzlager angeordnet ist, das mit seinem Innenring auf der Welle und mit seinem Außenring in dem ummantelten Teilbereich des zweiten Schenkels abgestützt ist, daß die Ummantelung auf der der Wandung zugewandten Seite entlang eines axialen Teilbereichs von einem zweiten Versteifungsring außenseitig umschlossen ist und daß die Ummantelung den zweiten Versteifungsring im herstellungsbedingten Zustand außerhalb des axialen Teilbereichs in radialer Richtung überragt. Die Ausgestaltung der Dichtungsanordnung bewirkt durch die Schwingungsisolierung/Schwingungsdämpfung bei Unwuchten der abzudichtenden Welle eine Geräuschreduzierung der akustisch störenden Schwingungen. Einer Fortpflanzung der unerwünschten Geräusche wird dadurch vorgebeugt.

Eine wesentliche Verbesserung der Festlegung der Dichtungsanordnung innerhalb der Wandung, beispielsweise eines Gehäuses, kann dadurch bewirkt werden, daß die Ummantelung des ersten Versteifungsrings auf der der Wandung zugewandten Seite entlang des axialen Teilbereichs von einem zweiten Versteifungsring, beispielsweise aus metallischem Werkstoff, außenseitig umschlossen ist und daß die Ummantelung den zweiten Versteifungsring in radialer Richtung überragt, so daß eine Abdichtung des Gehäuses gewährleistet ist. Durch die Verwendung des zweiten Versteifungsrings können axiale Verlagerungen der gesamten Dichtungsanordnung relativ zu der Wandung des Gehäuses zuverlässig vermieden werden, selbst wenn die abzudichtende Welle während der Rotation in radialer Richtung ausgelenkt wird und/ oder Wärmedehnungen aufweist.

Der zweite Versteifungsring, der der Ummantelung in adhäsiver Weise zugeordnet sein kann, wird in die Bohrung der Wandung eingepreßt und in dieser zuverlässig reibschlüssig gehalten.

Für eine einwandfreie Abdichtung des Gehäuses ist es vorgesehen, daß die Ummantelung des ersten Versteifungsrings den zweiten Versteifungsring in radialer Richtung überragt und dadurch unter elastischer Vorspannung mit der abzudichtenden Wandung in Eingriff bringbar ist. Bei einer derartigen Ausgestaltung ist von hervorzuhebender Bedeutung, daß eine ausgezeichnete Führung der abzudichtenden Welle durch die Abstützung des Wälzlagers gegeben ist, gleichzeitig die auftretenden Schwingungen isoliert/gedämpft werden und eine hervorragende räumliche Zuordnung der Dichtungsanordnung zwischen der Wandung und der Welle auch bei einer langen Gebrauchsdauer gegeben ist. Eine Übertragung von Schwingungsgeräuschen an die Umgebung ist deutlich reduziert.

Der zweite Versteifungsring und die Ummantelung können adhäsiv verbunden sein. Beispielsweise können die beiden Bauteile miteinander vulkanisiert oder durch einen Kleber miteinander verbunden werden. Eine derartige Festlegung beider Teile aneinander ist außerordentlich zuverlässig und bleibt auch während einer langen Gebrauchsdauer erhalten.

In fertigungstechnischer Hinsicht und im Hinblick auf eine einfache Montage ist es vorteilhaft, wenn der zweite Versteifungsring ein L-förmiges Profil aufweist und mit einem in radialer Richtung vorstehenden Flansch an einer Radialfläche der Wandlung anlegbar ist. Insbesondere wenn der zweite Versteifungsring an der Ummantelung anvulkanisiert ist, ergibt sich eine vereinfache Fertigung. Auch die Montage und die genaue Positionierung der Dichtungsanordnung im Spalt zwischen dem Gehäuse und der Welle wird durch den in radialer Richtung vorstehenden Flansch vereinfacht. Die Dichtungsanordnung kann in axialer Richtung in den Spalt zwischen Gehäuse und Welle so lange eingeschoben werden, bis sich der Flansch an die Wandung des Gehäuses anlegt.

In Abhängigkeit von den jeweiligen Gegebenheiten des Anwendungsfalls kann der Bereich der radial nach außen vorstehenden Begrenzung des Flansches mit einem Elastomer umschlossen sein, das einen Bestandteil der Ummantelung bilden kann und auf der der Wandung zugewandten Seite eine in axialer Richtung vorstehende Axialdichtlippe aufweist. Eine Leckage zwischen der Dichtungsanordnung und dem die Dichtungsanordnung umschließenden Gehäuse ist durch diese Ausgestaltung praktisch ausgeschlossen. Die in radialer Richtung vorstehenden Dichtrippen der Ummantelung und/oder die Axialdichtlippe halten die abzudichtende Flüssigkeit zuverlässig im abzudichtenden Raum zurück.

Gemäß einer vorteilhaften Ausgestaltung ist es vorgesehen, daß die Ummantelung auf der dem Außenring zugewandten Seite eine radiale Dicke von 0,2 bis 0,9 mm aufweist. Durch diese Ausgestaltung ist einerseits eine ausreichende Nachgiebigkeit bei radialen Verlagerungen der abzudichtenden Welle gewährleistet und andererseits eine gute Führung der Welle und des die Welle umschließenden Wälzlagers.

Im Hinblick auf eine besonders einfache Montage kann die Ummantelung auf der dem Wälzlager zugewandten Seite eine in Richtung des Außenrings offene, nutförmige Ausnehmung aufweisen, wobei der Außenring in die Ausnehmung einschnappbar ist. Die Nut weist dabei bevorzugt eine axiale Erstreckung auf, die die axiale Erstreckung des Außenrings des Wälzlagers etwas überschreitet, so daß eine Festlegung des Außenrings in der Nut einfach erfolgen kann und ein geringes Spiel in axialer Richtung vorhanden ist. Die nutförmige Ausnehmung weist ferner den Vorteil auf, daß das Wälzlager in seiner Lage bezogen auf die Welle und das Gehäuse fixiert ist. Ein Wandern des Wälzlagers in axialer Richtung relativ zum Dichtring kann dadurch zuverlässig vermieden werden.

Die Ummantelung kann auf der der Wandung zugewandten Seite mindestens zwei umlaufende Dichtrippen aufweisen, die mit axialem Abstand zueinander benachbart sind. Die Dichtrippen wirken in diesem Fall als statische Abdichtung, wobei in Abhängigkeit von den abzudichtenden Drücken und der Viskosität des abzudichtenden Mediums mehrere Dichtrippen in axialer Richtung hintereinander angeordnet sein können, um so ein Labyrinth zu bilden. Eine gute statische Abdichtung ist dadurch gewährleistet.

Die Welle kann von einer Hilfsdichtlippe dichtend umschlossen sein, die der Dichtlippe auf der dem abzudichtenden Medium abgewandten Seite in axialer Richtung benachbart zugeordnet ist, wobei die Hilfsdichtlippe, die Dichtlippe und die Welle einen Hohlraum begrenzen. Zur Verbesserung der Gebrauchseigenschaften während einer langen Gebrauchsdauer kann der gebildete Hohlraum während der bestimmungsgemäßen Verwendung mit Fett gefüllt sein. Die als Vorschaltdichtung wirkende Hilfsdichtlippe hält dadurch in Verbindung mit dem fettgefüllten Hohlraum gebrauchsdauerverringende Verunreinigungen von der Dichtlippe fern. Von hervorzuhebender Bedeutung ist, daß die erfindungsgemäße Dichtungsanordnung auch unter extrem harten Einsatzbedingungen zur Anwendung gelangen kann.

Gemäß einer weiteren vorteilhaften Ausgestaltung kann es vorgesehen sein, daß der zweite Schenkel ein gekröpftes Profil aufweist, daß der in seinem Durchmesser relativ erweiterte Teilbereich des zweiten Schenkels den Außenring des Wälzlagers unter radialer Zwischenschaltung der Ummantelung zumindest teilweise umgreift und daß der in seinem Durchmesser relativ verkleinerte Teilbereich des zweiten Schenkels unter radialer Zwischenschaltung der Ummantelung innerhalb des zweiten Versteifungsrings angeordnet ist. Hierbei ist von Vorteil, daß die Dichtungsanordnung besonders geringe Abmessungen in radialer Richtung aufweist. Neben den geringen Abmessungen in radialer Richtung sind außerdem annähernd gleichbleibende Wandstärken der Ummantelung um den ersten Versteifungsring gewährleistet, so daß unerwünschte Materialanhäufungen vermieden werden. Außerdem wird der relativ in seinem Durchmesser erweiterte Teilbereich zur verbesserten Abstützung des Außenrings des Wälzlagers in axialer Richtung genutzt so daß eine genauere Positionierung des Wälzlagers innerhalb der Dichtungsanordnung bewirkt wird. Im Rahmen der vorliegenden Erfindung ist es vorgesehen, daß die beiden Versteifungsringe einander konzentrisch zugeordnet sind.

Es hat sich gezeigt, daß besonders gute Gebrauchseigenschaften bezüglich der Schwingungsisolierung/Schwingungsdämpfung und der Minimierung der Geräuschübertragung erzielt werden können, wenn die Ummantelung zwischen den beiden Versteifungsringen eine Schichtdicke von 0,7 bis 3 mm, bevorzugt von 0,8 mm bis 1,5 mm aufweist.

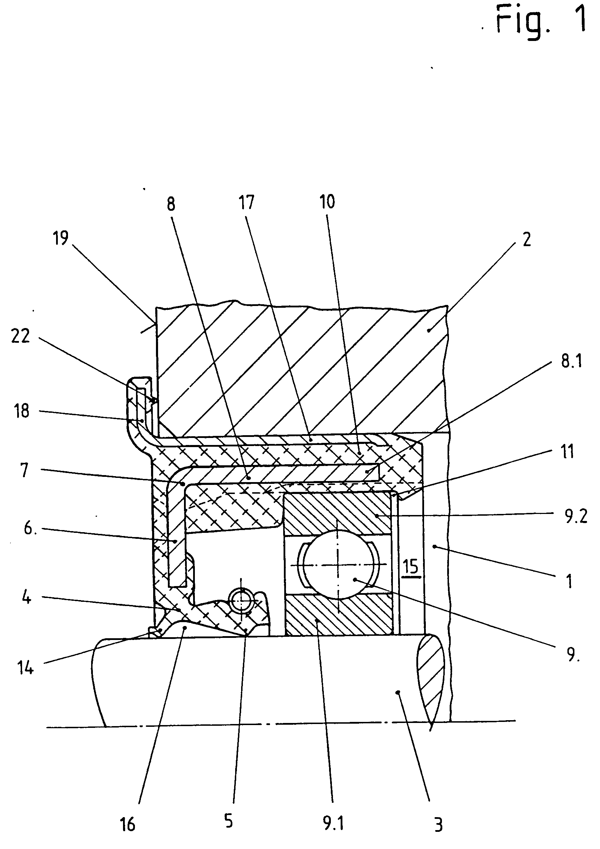

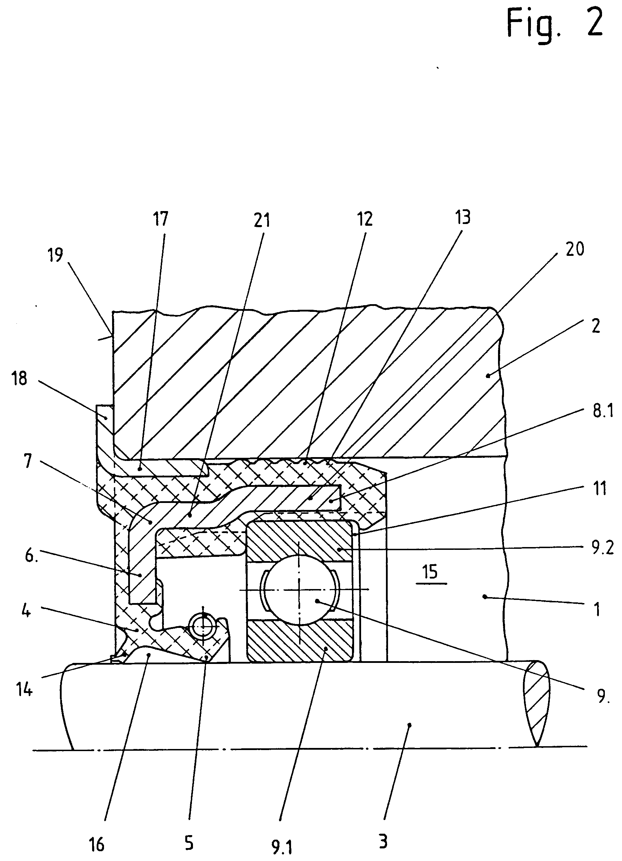

Die erfindungsgemäße Dichtungsanordnung wird nachfolgend anhand der als Anlage beigefügten Figuren 1 und 2, die Ausführungsbeispiele darstellen, weiter erläutert.

In Figur 1 ist eine Dichtungsanordnung mit in axialer Richtung gradlinig verlaufendem zweiten Schenkel gezeigt und ein Flansch, der im Bereich seiner radialen Begrenzung mit elastomerem Werkstoff ummantelt ist, wobei der elastomere Werkstoff einstückig mit der Ummantelung ausgeführt ist.

In Figur 2 ist eine Dichtungsanordnung gezeigt, ähnlich der Dichtungsanordnung aus Figur 1, wobei der zweite Schenkel gekröpft ausgestaltet ist und der zweite Verbindungsring im Bereich seiner radialen Begrenzung keine Ummantelung aufweist. Außerdem baut die Dichtungsanordnung gemäß Figur 2 in radialer Richtung kleiner.

In den Figuren 1 und 2 ist jeweils ein Ausführungsbeispiel einer Dichtungsanordnung zur Abdichtung einer durch die Bohrung 1 einer Wandung 2 geführten Welle 3 gezeigt. Die Dichtungsanordnung besteht im wesentlichen aus einem Radialwellendichtring 4 und einem integrierten Wälzlager 9, wobei der Radialwellendichtring 4 die relativ zur Wandung 2 rotierende Welle 3 dynamisch abdichtet und die Wandung 2 statisch. In den hier dargestellten Ausführungsbeispielen wird die dynamische Abdichtung der Welle 3 durch eine Dichtlippe 5 und eine Hilfsdichtlippe 14 bewirkt, die die abzudichtende Welle 3 umfangsseitig dichtend berühren. Die Hilfsdichtlippe 14 ist der Dichtlippe 5 in axialem Abstand benachbart zugeordnet und begrenzt dadurch mit der abzudichtenden Welle 3 einen Hohlraum 16, der zum Schutz der Dichtlippe 5 mit Fett befüllbar ist. Der erste Versteifungsring 7 weist in beiden Ausführungsbeispielen einen sich in axialer Richtung erstreckenden zweiten Schenkel 8 auf, der von der Ummantelung 10 vollständig umschlossen ist. Das Wälzlager 9 ist einerseits mit seinem Innenring 9.1 auf der Welle 3 und andererseits mit seinem Außenring 9.2 in einer nutförmigen Ausnehmung 11 der Ummantelung 10 gehalten. Die erfindungsgemäßen Dichtungsanordnungen bewirken einerseits eine gute Abstützung der rotierenden Welle bei gleichzeitiger Schwingungsisolierung/Schwingungsdämpfung der auftretenden Schwingungen und Verringerung von Geräuschbildung und andererseits eine zuverlässige räumliche Fixierung der Dichtungsanordnung im Spalt zwischen der Wandung 2 und der Welle 3.

In Figur 1 ist der zweite Schenkel 8 des ersten Versteifungsrings 7 in axialer Richtung geradlinig ausgebildet und der zweite Versteifungsring 17 weist mit dem ersten Versteifungsring 7 eine im wesentlichen übereinstimmende Erstreckung in axialer Richtung auf. Die Ummantelung 10 im Bereich der axialen Begrenzung 8.1 des zweiten Schenkels 8 überragt im herstellungsbedingten Zustand den zweiten Versteifungsring 17 in radialer Richtung geringfügig, so daß während der bestimmungsgemäßen Verwendung in diesem Bereich bereits eine zuverlässige Abdichtung des abzudichtenden Mediums 15 im abzudichtenden Raum gewährleistet ist. Zusätzlich weist nur der in radialer Richtung nach außen vorstehende Flansch 18 des zweiten Versteifungsrings 17 eine Ummantelung mit elastomerem Werkstoff auf, die einstückig mit der Ummantelung 10 des zweiten Schenkels 8 ausgebildet ist. Die zuverlässige Festlegung der Dichtungsanordnung innerhalb des Spaltes wird durch die reibschlüssige Verbindung zwischen der Außenumfangsfläche des zweiten Versteifungsrings 17 und der Innenumfangsfläche der Wandung 2 gewährleistet. Eine zusätzliche Sicherheit bezüglich der Abdichtung des Gehäuses wird durch die Axialdichtlippe 22 gewährleistet, die den in radialer Richtung vorstehenden Flansch 18 gegen die Radialfläche 19 abdichtet.

In Figur 2 hat der zweite Schenkel 8 ein gekröpftes Profil, wobei der in seinem Durchmesser relativ erweiterte Teilbereich 20 des zweiten Schenkels 8 den Außenring 9.2 des Wälzlagers 9 unter radialer Zwischenschaltung der Ummantelung 10 mit gleichbleibendem Abstand im wesentlichen umgreift. Der in seinem Durchmesser relativ verkleinerte Teilbereich 21 des zweiten Schenkels 8 ist unter radialer Zwischenschaltung der Ummantelung innerhalb des zweiten Versteifungsrings 17 angeordnet. Hierbei ist von hervorzuhebender Bedeutung, daß die Schichtdicke der Ummantelung 10 im wesentlichen gleichbleibend ist, wodurch unerwünschte Materialanhäufungen vermieden werden können. Dies ist in fertigungstechnischer Hinsicht von hervorzuhebender Bedeutung. Die reibschlüssige Verbindung wird in diesem Falle zwischen dem Gehäuse 2 und dem zweiten Versteifungsring 17 gebildet, der in axialer Richtung kürzer ausgebildet ist, als der zweite Versteifungsring 17 aus Figur 1. Auch in diesem Beispiel überragt die Ummantelung 10 den zweiten Versteifungsring 17 in radialer Richtung nach außen, so daß eine zuverlässige Abdichtung des abzudichtenden Mediums 15 gewährleistet ist. In der Funktionsweise und in ihren guten Gebrauchseigenschaften sind sich die Ausführungsbeispiele aus den Figuren 1 und 2 ähnlich.

## Patentansprüche

1. Dichtungsanordnung zur Abdichtung einer durch die Bohrung (1) einer Wandung (2) geführten Welle (3), umfassend einen Radialwellendichtring (4), der die abzudichtende Welle (3) mit zumindest einer Dichtlippe (5) aus elastomerem Werkstoff unter radialer Vorspannung umfangsseitig dichtend umschließt, wobei die Dichtlippe (5) an einem radial nach innen weisenden ersten Schenkel (6) eines im wesentlichen L-förmigen ersten Versteifungsringes (7) festgelegt ist, wobei sich der zweite Schenkel (8) in axialer Richtung erstreckt und zumindest im Bereich seiner axialen Begrenzung (8.1) von elastomerem Werkstoff ummantelt ist, wobei in radialer Richtung zwischen der Welle (3) und dem zweiten Schenkel (8) ein Wälzlager (9) angeordnet ist, dadurch gekennzeichnet, daß das Wälzlager (9) mit seinem Innenring (9.1) auf der Welle (3) und mit seinem Außenring (9.2) in dem ummantelten Teilbereich des zweiten Schenkels (8) abgestützt ist, daß die Ummantelung (10) auf der der Wandung (2) zugewandten Seite entlang eines axialen Teilbereichs von einem zweiten Versteifungsring (17) außenseitig umschlossen ist und daß die Ummantelung (10) den zweiten Versteifungsring (17) im herstellungsbedingten Zustand außerhalb des axialen Teilbereichs in radialer Richtung überragt.

2. Dichtungsanordnung nach Anspruch 1, dadurch gekennzeichnet, daß der zweite Versteifungsring (17) und die Ummantelung (10) adhäsiv verbunden sind.

3. Dichtungsanordnung nach Anspruch 1 bis 2, dadurch gekennzeichnet, daß der zweite Versteifungsring (17) ein L-förmiges Profil aufweist und mit einem in radialer Richtung vorstehenden Flansch (18) an einer Radialfläche (19) der Wandung (2) anlegbar ist.

4. Dichtungsanordnung nach Anspruch 3, dadurch gekennzeichnet, daß der Flansch (18) zumindest im Bereich seiner radial nach außen vorstehenden Begrenzung von Elastomer umschlossen ist und auf der der Wandung (2) zugewandten Seite eine in axialer Richtung vorstehende Axialdichtlippe (22) aufweist.

5. Dichtungsanordnung nach Anspruch 1 bis 4, dadurch gekennzeichnet, daß die Ummantelung (10) auf der dem Außenring (9.2) zugewandten Seite eine radiale Dicke von 0,2 bis 0,9 mm aufweist.

6. Dichtungsanordnung nach Anspruch 1 bis 5, dadurch gekennzeichnet, daß die Ummantelung (10) auf der dem Wälzlager (9) zugewandten Seite eine in Richtung des Außenrings (9.2) offene, nutförmige Ausnehmung (11) aufweist und daß der Außenring (9.2) in die Ausnehmung (11) einschnappbar ist.

7. Dichtungsanordnung nach Anspruch 1 bis 6, dadurch gekennzeichnet, daß die Ummantelung (10) auf der der Wandung (2) zugewandten Seite wenigstens zwei umlaufende Dichtrippen (12, 13) aufweist und daß die Dichtrippen (12, 13) mit axialem Abstand zueinander benachbart sind.

8. Dichtungsanordnung nach Anspruch 1 bis 7, dadurch gekennzeichnete, daß die Welle (3) von einer Hilfsdichtlippe (14) dichtend umschlossen ist, die der Dichtlippe (5) auf der dem abzudichtenden Medium (15) abgewandten Seite in axialer Richtung benachbart zugeordnet ist und daß die Hilfsdichtlippe (14), die Dichtlippe (5) und die Welle (3) einen Hohlraum (16) begrenzt.

9. Dichtungsanordnung nach Anspruch 8, dadurch gekennzeichnet, daß der Hohlraum (16) während der bestimmungsgemäßen Verwendung mit Fett gefüllt ist.

10. Dichtungsanordnung nach Anspruch 1 bis 9, dadurch gekennzeichnet, daß der zweite Schenkel (8) ein gekröpftes Profil aufweist, daß der in seinem Durchmesser relativ erweitere Teilbereich (20) des zweiten Schenkels (8) den Außenring (9.2) unter radialer Zwischenschaltung der Ummantelung (10) zumindest teilweise umgreift und daß der in seinem Durchmesser relativ verkleinerte Teilbereich (21) des zweiten Schenkel (8) unter radialer Zwischenschaltung der Ummantelung (10) innerhalb des zweiten Versteifungsrings (17) angeordnet ist.

11. Dichtungsanordnung nach Anspruch 10, dadurch gekennzeichnet, daß die Versteifungsringe (7, 17) einander konzentrisch zugeordnet sind.

12. Dichtungsanordnung nach Anspruch 7 bis 11, dadurch gekennzeichnet, daß die Ummantelung (10) zwischen den beiden Versteifungsringen (7, 17) eine Schichtdicke von 0,7 bis 3 mm aufweist.

## Claims

1. A sealing arrangement for sealing a shaft (3) guided through the bore (1) of a wall (2), comprising a radial shaft lip seal (4), which, under radial pretensioning, encloses the shaft (3) to be sealed in sealing arrangement on the peripheral side with at least one sealing lip (5) made from elastomeric material, the sealing lip (5) being secured to a radially inward pointing first limb (6) of an essentially L-shaped first stiffening ring (7), the second limb (8) extending in the axial direction and being encased by elastomeric material at least in the region of its axial limit (8.1), a roller bearing (9) being disposed in the radial direction between the shaft (3) and the second limb (8), characterized in that the roller bearing (9) is supported by its inner ring (9.1) on the shaft (3) and by its outer ring (9.2) in the encased part-region of the second limb (8), in that the casing (10) on the side facing the wall (2) is enclosed on the outer side along an axial part-region by a second stiffening ring (17), and in that in the manufacturing-dictated state the casing (10) juts over the second stiffening ring (17) outside the axial part-region in the radial direction.

2. A sealing arrangement according to claim 1, characterized in that the second stiffening ring (17) and the casing (10) are adhesively joined.

3. A sealing arrangement according to either of claims 1 and 2, characterized in that the second stiffening ring (17) has an L-shaped profile and can be applied with a radially protruding flange (18) to a radial face (19) of the wall (2).

4. A sealing arrangement according to claim 3, characterized in that the flange (18) is enclosed by elastomer at least in the region of its radially outward protruding limit and has an axially protruding axial sealing lip (22) on the side facing the wall (2).

5. A sealing arrangement according to any of claims 1 to 4, characterized in that the casing (10) has a radial thickness of 0.2 to 0.9 mm on the side facing the outer ring (9.2).

6. A sealing arrangement according to any of claims 1 to 5, characterized in that on the side facing the roller bearing (9) the casing (10) has a groove-shaped recess (11) which is open in the direction of the outer ring (9.2), and in that the outer ring (9.2) can be snap-locked into the recess (11).

7. A sealing arrangement according to any of claims 1 to 6, characterized in that on the side facing the wall (2) the casing (10) has at least two circumferential sealing ribs (12, 13), and in that the sealing ribs (12, 13) are mutually adjacent at an axial distance apart.

8. A sealing arrangement according to any of claims 1 to 7, characterized in that the shaft (3) is enclosed in sealing arrangement by an auxiliary sealing lip (14), which is assigned adjacently to the sealing lip (5) in the axial direction on the side facing away from the medium (15) to be sealed, and in that the auxiliary sealing lip (14), the sealing lip (5) and the shaft (3) delimit a cavity (16).

9. A sealing arrangement according to claim 8, characterized in that during prescriptively correct usage the cavity (16) is filled with grease.

10. A sealing arrangement according to any of claims 1 to 9, characterized in that the second limb (8) has a cranked profile, in that that part-region (20) of the second limb (8) which is relatively widened in its diameter at least partially embraces the outer ring (9.2), the casing (10) being radially interposed, and in that that part-region (21) of the second limb (8) which is relatively diminished in its diameter is disposed within the second stiffening ring (17), the casing (10) being radially interposed.

11. A sealing arrangement according to claim 10, characterized in that the stiffening rings (7, 17) are assigned concentrically to each other.

12. A sealing arrangement according to any of claims 7 to 11, characterized in that the casing (10) has a layer thickness of 0.7 to 3 mm between the two stiffening rings (7, 17).

## Revendications

1. Dispositif d'étanchéité pour l'étanchéification d'un arbre (3) guidé à travers l'alésage (1) d'une paroi (2), comprenant une bague à lèvres avec ressort (4), qui entoure de façon étanche et de façon périphérique sous précontrainte radiale l'arbre à étanchéifier (3) avec au moins une lèvre d'étanchéité (5) en matériau élastomère, la lèvre d'étanchéité (5) étant fixée à une première branche (6) présente dans le sens radial vers l'intérieur d'une première bague de renforcement (7) essentiellement en forme de L, la deuxième branche (8) s'étendant dans le sens axial et étant enveloppée de matériau élastomère au moins dans la zone de sa limitation axiale (8.1), un palier à roulement (9) étant disposé dans le sens radial entre l'arbre (3) et la deuxième branche (8), caractérisé en ce que le palier à roulement (9) est appuyé par sa bague intérieure (9.1) sur l'arbre (3) et par sa bague extérieure (9.2) dans la zone partielle enveloppée de la deuxième branche (8), en ce que l'enveloppe (10) sur le côté orienté vers la paroi (2) le long d'une zone partielle axiale est entouré sur le côté extérieur par une deuxième bague de renforcement (17), et en ce que l'enveloppe (10) dépasse dans le sens radial la deuxième bague de renforcement (17) dans l'état défini à la fabrication en dehors de la zone partielle axiale.

2. Dispositif d'étanchéité selon la revendication 1, caractérisé en ce que la deuxième bague de renforcement (17) et l'enveloppe (10) sont reliés de façon adhésive.

3. Dispositif d'étanchéité selon les revendications 1 à 2, caractérisé en ce que la deuxième bague de renforcement (17) présente un profil en forme de L et peut être appliquée avec une bride (18) faisant saillie dans le sens radial sur une surface radiale (19) de la paroi (2).

4. Dispositif d'étanchéité selon la revendication 3, caractérisé en ce que la bride (18) est entourée d'élastomère au moins dans la zone de sa limitation faisant saillie de façon radiale vers l'extérieur et présente sur le côté orienté vers la paroi (2) une lèvre d'étanchéité axiale (22) faisant saillie dans le sens axial.

5. Dispositif d'étanchéité selon les revendications 1 à 4, caractérisé en ce que l'enveloppe (10) présente sur le côté orienté vers la bague extérieure (9.2) une épaisseur radiale de 0,2 à 0,9 mm.

6. Dispositif d'étanchéité selon les revendications 1 à 5, caractérisé en ce que l'enveloppe (10) présente sur le côté orienté vers le palier à roulement (9) un évidement (11) en forme de rainure, ouvert dans le sens de la bague extérieure (9.2) et en ce que la bague extérieure (9.2) peut s'enclencher dans l'évidement (11).

7. Dispositif d'étanchéité selon les revendications 1 à 6, caractérisé en ce que l'enveloppe (10) présente sur le côté orienté vers la paroi (2) au moins deux nervures d'étanchéité périphériques (12, 13) et en ce que les nervures d'étanchéité (12, 13) sont contiguës l'une de l'autre avec un écartement axial.

8. Dispositif d'étanchéité selon les revendications 1 à 7, caractérisé en ce que l'arbre (3) est entouré de façon étanche d'une lèvre d'étanchéité auxiliaire (14), qui est associée de façon contiguë dans le sens axial à la lèvre d'étanchéité (5) sur le côté orienté vers le milieu (15) à étanchéifier et en ce que la lèvre d'étanchéité auxiliaire (14), la lèvre d'étanchéité (5) et l'arbre (3) délimitent un espace creux (16).

9. Dispositif d'étanchéité selon la revendication 8, caractérisé en ce que l'espace creux (16) est rempli de graisse pendant l'utilisation en conformité avec sa destination.

10. Dispositif d'étanchéité selon les revendications 1 à 9, caractérisé en ce que la deuxième branche (8) présente un profil coudé, en ce que la zone partielle (20), relativement agrandie au niveau de son diamètre, de la deuxième branche (8) enveloppe au moins partiellement la bague extérieure (9.2) par insertion radiale de l'enveloppe (10) et en ce que la zone partielle (21), relativement réduite au niveau de son diamètre, de la deuxième branche (8) est disposée par insertion radiale de l'enveloppe (10) à l'intérieur de la deuxième bague de renforcement (17).

11. Dispositif d'étanchéité selon la revendication 10, caractérisé en ce que les bagues de renforcement (7, 17) sont associées mutuellement de façon concentrique.

12. Dispositif d'étanchéité selon les revendications 7 à 11, caractérisé en ce que l'enveloppe (10) présente une épaisseur de couche de 0,7 à 3 mm entre les deux bagues de renforcement (7, 17).
